# EUROPEAN PATENT APPLICATION

(11) **EP 1 408 401 A2**
(43) Date of publication of application: **14.04.2004**
(21) Application number: 03256403.1
(22) Date of filing: 10.10.2003
(51) Int. Cl.: G06F 3/12

(54) **Printing method and printer**

(30) Priority: 11.10.2002 KR 2002062114
(71) Applicant: SAMSUNG ELECTRONICS CO., LTD., Suwon-City, Kyungki-do (KR)
(72) Inventor: Han, Ho-sung, -dong Jangan-gun, Suwon-si Gyeonggi-do (KR)
(74) Representative: Geary, Stuart Lloyd

(57) **Abstract**

A printing system including a first memory unit storing a printer operating system and at least two interpreters; a second memory unit having an operating area for the printer operating system, an operating area and a heap area for each interpreter of the first memory unit, and at least two reception buffers temporarily storing incoming print job data; a printing control unit controlling operation of the printing system based on the printer operating system, controlling the interpreters of the first memory unit to interpret the print job data, and transmitting the interpreted print job data to a printer engine; and a print job scheduling unit providing a first scheduling procedure regarding initiation of the interpreters for multiple print jobs and a second scheduling procedure regarding interpretation of the multiple print jobs that have been initiated, the printer control unit using the first scheduling procedure and the second scheduling procedure to control the operation of the interpreters.

## Description

The present invention relates to a method of processing a plurality of print jobs in a printer, the method comprising receiving first high level print data for a first print job, subsequently receiving high level print data for a second print job, interpreting the first high level print data to produce first low level print data, interpreting the second high level print data to produce second low level print data and printing in accordance with the first and second low level print data, and to a printer comprising a print engine, interface means for receiving high level print data for print jobs and processing means configured for interpreting high level print data, received by the interface means to produce low level print data for controlling the print engine.

In a general network printing system where one network printer is shared by multiple users, the client computers are provided with printer driver software that outputs print commands appropriate for the selected printer. For example, a postscript (PS) printer driver outputs generates PostScript printer commands from, in the case of Windows, functions which that send text and graphics to the printer device context. Similarly, a printer control language (PCL) driver outputs PCL signals to the printer.

Network printers temporarily store print job data from clients in a reception buffer. An interpreter program, e.g. a PS or PCL interpreter, generates control signal for the printer's print engine from the stored print job data for performing the actual printing.

A problem arises with network printers in that the print jobs are processed strictly in the order in which they are received. Consequently, one user, who only wants to print a short text memo, must wait for another's highly graphical presentation to be printed first, even if the memo arrived at the printer only a short time before the presentation.

A method according to the present invention is characterised by interrupting interpretation of said first high level print data to perform interpretation of said second high level print data.

Preferably, each print job has priority associated therewith and the interpretation of the first high level data is interrupted if the priority of the second print job is greater than or equal to the priority of the first print job.

More preferably, if, said priorities are equal, the interpretation of the first and second high level data is performed on a time-sharing basis and/or the interpretation of the first high level print data is interrupted, if the priority of the second job is less than the priority of the first job and a predetermined period has elapsed since the start of the interpretation of the first high level print data.

Preferably, the interpretation of the first and second high level data is performed on a time-sharing basis.

A printer according to the present invention is characterised in that the control means is configured for interrupting interpretation of the first high level print data of a first print job to perform interpretation of the second high level print data of a second subsequently received print job.

Preferably, the control means is configured for determining a priority for each print job and to interrupt the interpretation of the first high level data if the determined priority of the second print job is greater than or equal to the determined priority of the first print job.

More preferably, the control means is configured such that if, said priorities are equal, the interpretation of the first and second high level data is performed on a time-sharing basis, and/or the control means is configured such that the interpretation of the first high level print data is interrupted, if the priority of the second job is less than the priority of the first job and a predetermined period has elapsed since the start of the interpretation of the first high level print data.

Preferably, the control means is configured such that the interpretation of the first and second high level data is performed on a time-sharing basis.

Further preferred and optional features of the present invention are set forth in claim 11 to 44 appended hereto.

An embodiment of the present invention will now be described, by way of example, with reference to the accompanying drawings, in which:
Figure 1 illustrates the configuration of a network printing system using a print job schedule control method according to the present invention;
Figure 2 is a block diagram illustrating the configuration of the network printer shown in Figure 1;
Figure 3 is a detailed block diagram of the first memory unit and the printing control unit shown in Figure 2;
Figure 4 is a mapping diagram of the first memory unit of Figure 2;
Figure 5 is a mapping diagram of a second memory unit shown in Figure 2;
Figure 6 is a flowchart illustrating a method of controlling a print job schedule according to the present invention;
Figure 7 is a flowchart illustrating the operation of initiating interpreters for multiple print jobs shown in Figure 6; and
Figure 8 is a flowchart illustrating the operation of interpreting the multiple print job data shown in Figure 6.

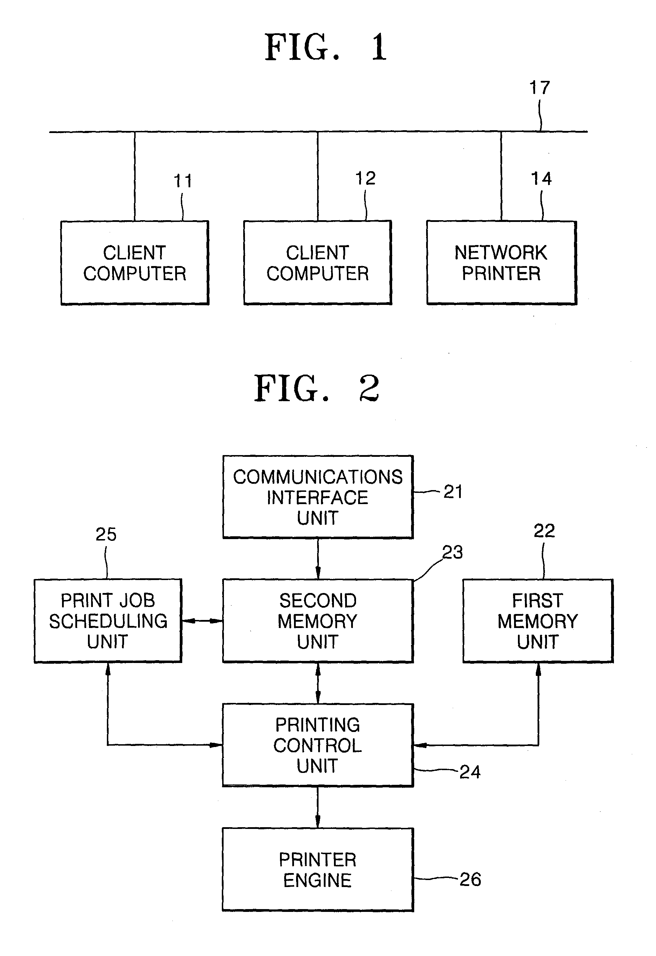

Referring to Figure 1, *n* client computers 11, 12, where *n* is an integer greater than or equal to 2, are interconnected by a network 17. Each client computer 11, 12 has a printer driver program that can be run as necessary to generate print job data, e.g PS or PCL data, from printing function calls by application programs. The printer drivers are able to support various printer description languages in this embodiment of the present invention.

A network printer 14 is also connected to the network 17 via a communications interface unit (not shown). The network printer 14 is a laser printer in this example, but may be an inkjet printer or other type, and converts print job data from the relatively high level commands the client computers 11, 12 into low level control signals for controlling the formation of dot images page by page, and prints the images page by page.

Referring to Figure 2, the printer 14 comprises a communications interface unit 21 which includes a network card having a media access control (MAC) address assigned thereto and is responsible for data transmission and reception between the client computers 11, 12 and the network printer 14 via the network 17, which may be, for example, the Internet or a local area network (LAN).

A ROM first memory unit 22 includes a printer operating system (OS) and at least two interpreters, which may be the same or different types of interpreters.

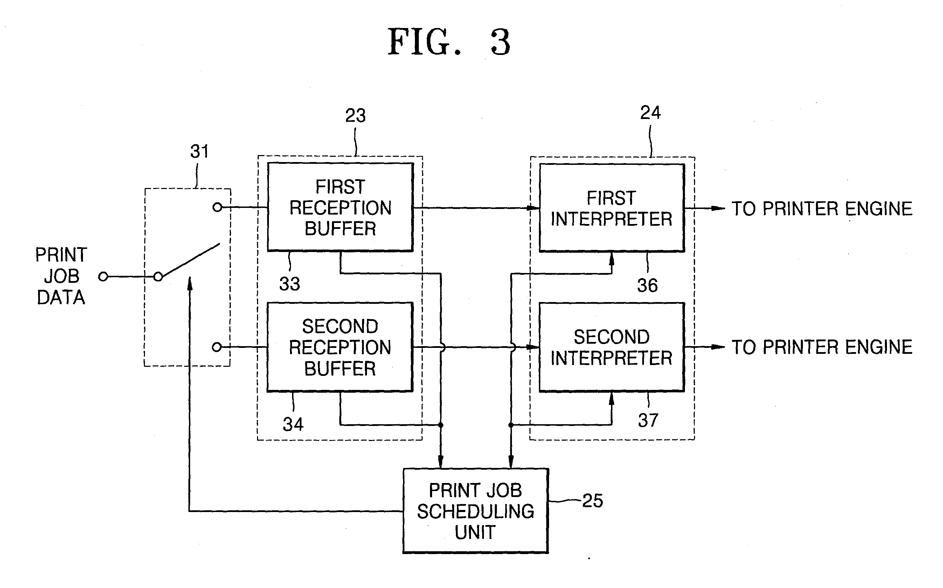

A RAM second memory unit 23 includes an operating area for a printing control program (i.e. the printer operating system (OS)), operating areas for the interpreters and respective heap areas for the interpreters. Areas for a first reception buffer 32 and a second reception buffer 33 (Figure 3) exist in the OS operating area or in the interpreter heap areas.

A printing control unit 24 operates in accordance with the printer OS, stored in the first memory unit 22, to control the overall operation of the printer and runs the interpreters for interpreting print job data from the client computers 11, 12 to generate bit map data which it transmits to a print engine 26.

A print job scheduling unit 25 controls the operation of the second memory unit 23 and the printing control unit 24 when there are multiple print job requests, according to a first scheduling procedure for controlling the initiation of interpreters for multiple print jobs and a second scheduling procedure for controlling the process status of multiple print jobs that have been initiated.

The print engine 26 prints bit map data, generated by the printing control unit 24, onto sheets.

Referring to Figure 3, a switching unit 31 passes print job data transmitted from the client computers 11, 12 to either the first reception buffer 32 or the second reception buffer 34 in response to a control signal from the print job scheduling unit 25.

The printing control unit 24 employs a first interpreter 36 and a second interpreter 37, stored in the first memory unit 22. In the present embodiment, the first interpreter 36 is a PCL interpreter and the second interpreter 37 is a PS interpreter. The second memory unit 23 includes the first reception buffer 33 and the second reception buffer 34. Although in this embodiment, the second memory unit 23 is described as including two reception buffers, for convenience of understanding, the second memory unit 23 may include a plurality of reception buffers depending on the network environment, the network printer capacity, and, particularly, the size of the second memory unit 23. Likewise, although the first interpreter 36 and the second interpreter 37 are described as being different types (i.e. PCL and PS interpreters), the first interpreter 36 and the second interpreter 37 may be the same type (i.e. both can be either PCL interpreters or PS interpreters). In addition, the first memory unit 22 may include a plurality of interpreters depending on the network printer capacity.

The print job scheduling unit 25 provides a control signal, which indicates whether the first reception buffer 33 and the second reception buffer 34 are empty or full, to the switching unit 31 and controls the printing control unit 24 based on the first and second scheduling procedures, to be described later, to enable the printing control unit 24 to interpret the print job data received from the first reception buffer 33 or the second reception buffer 34.

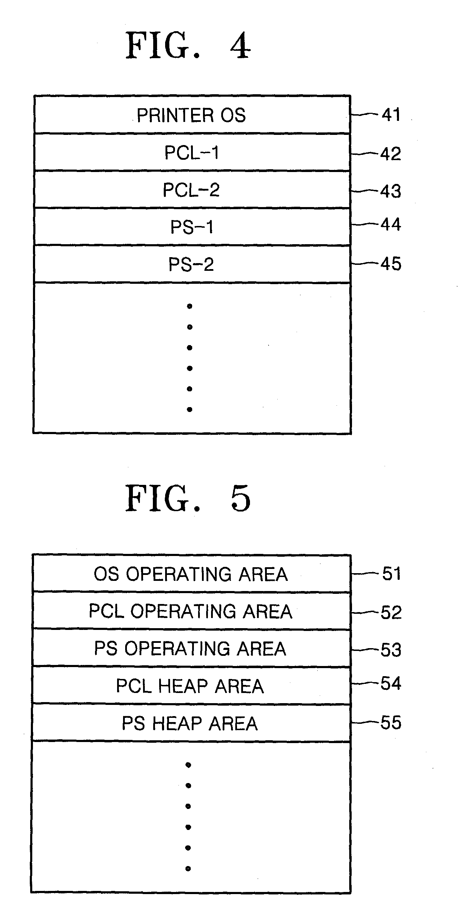

Referring to Figure 4, the first memory unit 22 includes a first area 41 storing the printer OS, a second area 42 storing a first PCL interpreter PCL-1, a third area 43 storing a second PCL interpreter PCL-2, a fourth area 44 storing a first PS interpreter PS-1, a fifth area 45 storing a second PS interpreter PS-2, etc. In the present description, the case of scheduled print jobs will be considered. In addition, two interpreter areas are assigned in the first memory unit 22 for the first interpreter type 36 and the second interpreter type 37 (i.e. for each of the PCL and PS type interpreters).

Alternatively, a plurality of interpreters may be stored in the first memory unit 22 as described below, depending on the memory size of the first memory unit 22 and/or the second memory unit 23.

When the first memory unit 22 has sufficient memory capacity, a plurality of interpreters are stored in the first memory unit 22 and are assigned different link addresses.

When the first memory unit 22 has insufficient memory capacity while the second memory unit 23 has sufficient memory capacity, a plurality of compressed interpreters may be stored in the first memory unit 22. The compressed interpreters are then decompressed and copied into the second memory unit 23 for use.

Referring to Figure 5, the second memory unit 23 of Figure 2 includes a first area 51 which is the operating area of the printer OS, a second area 52 which is the operating area of the first and second PCL interpreters PCL-1, PCL-2, a third area 53 which is the operating area of first and second PS interpreters PS-1, PS-2, a fourth area 54 which is used as a heap area by the first and second PCL interpreters PCL-1, PCL-2, a fifth area 55 which is used as a heap area by the first and second PS interpreters PS-1, PS-2. The fourth and fifth areas 54, 55, described as heap areas, are for dynamic memory allocation required during interpretation and occupy most of the second memory unit 23. In particular, when the first interpreter 36 or the second interpreter 37 receives data to process, the heap areas 54, 55 are used to temporarily store the received data and for converting the received data into printable data, the conversion requiring large-memory allocation/deallocation.

When the first interpreter 36 or the second interpreter 37 starts to interpret a print job A, memory in the fourth or fifth area 54, 55 is repeatedly allocated and freed during processing of print job A. When most of the fourth or fifth area 54, 55 is being used for print job A, no space may remain in the fourth or fifth area 54, 55 for allocation for a print job B, which subsequently starts being interpreted by the first interpreter 36 or the second interpreter 37. To prevent this situation, heap areas are allocated in one of the following three ways, depending on the capacity of the second memory unit 23.

A first allocation method is to share a heap area in the fourth or fifth areas 54, 55 for multiple print jobs. According to this method, when most of the fourth or fifth area 54, 55 is used for print job A, the first interpreter 36 or the second interpreter 37 must wait to interpret print job B until a predetermined amount of memory becomes available for print job B.

A second allocation method is to allocate a predetermined heap area for each print job in the fourth or fifth areas 54, 55. According to this method, the heap area for print job A in the fourth or fifth area 54, 55 is distinguished from the heap area for print job B. Even if print job A starts to be interpreted earlier than print job B, the heap previously assigned to print job B is reserved for print job B. Heap areas may be allocated uniformly for individual print jobs. For efficiency in use, allocated heap areas include a heap area for print job A, a heap area for print job B, and a common heap area for print jobs A and B.

A third allocation method is to divide the entire heap region of the fourth or fifth areas 54, 55 into segments of a predetermined size for segment-based print job interpretation. In particular, once print job A starts to be interpreted, heap segments are assigned for the interpretation of print job A. Then, as print job B starts to be interpreted, the heap area for print job B is assigned from the segment following the last heap segment for print job A. Heap utilization efficiency is maximized with this method.

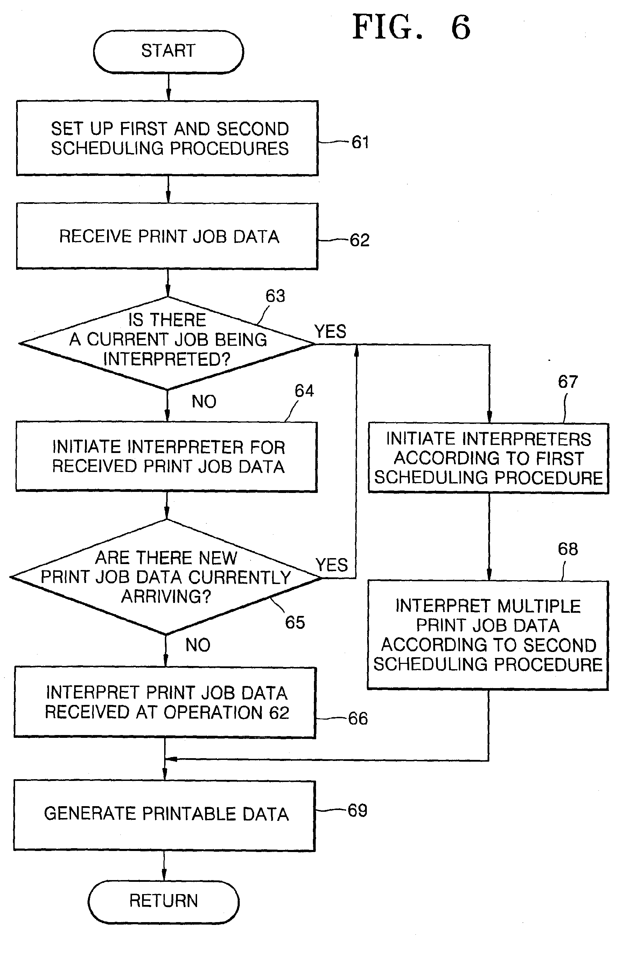

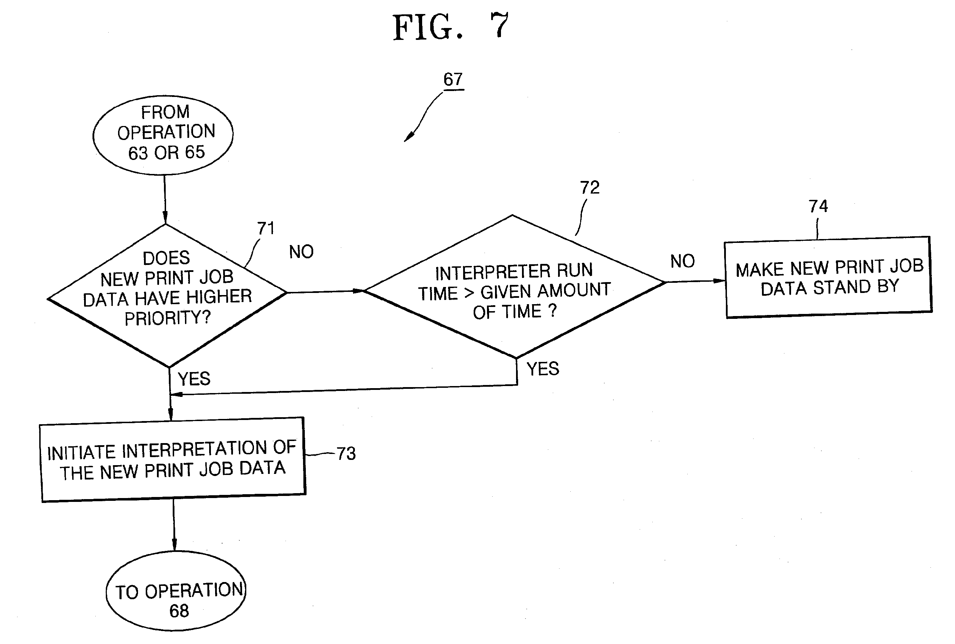

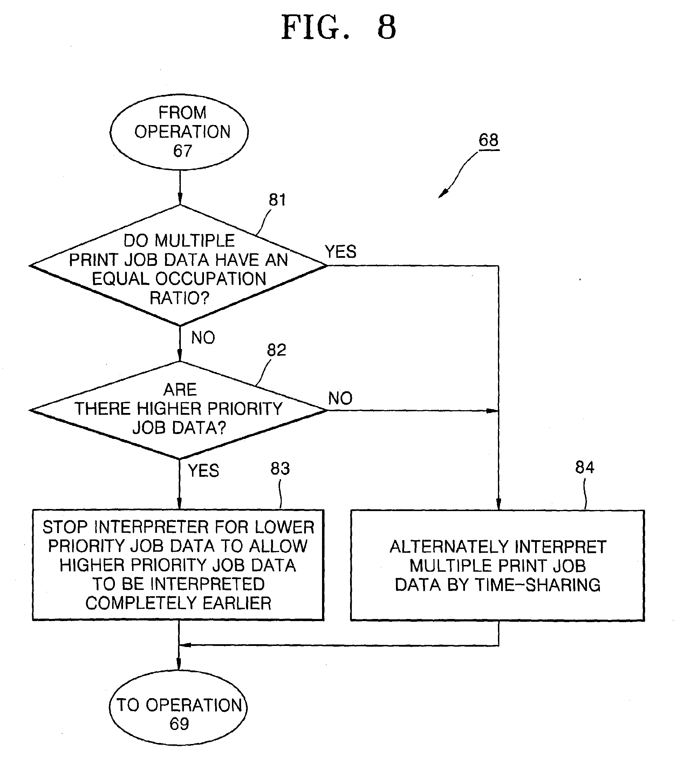

Referring to Figure 6, during printing, the print job scheduling unit 25 establishes a first scheduling procedure, regarding the initiation of the first interpreter 36 and the second interpreter 37 in response to multiple print job request, and a second scheduling procedure, regarding a process of interpreting the multiple print jobs that have been initiated, at operation 61. The first and second scheduling procedures are described below in more detail with reference to Figures 7 and 8.

When the network printer 14 receives print job data from the client computers 11, 12 at operation 62, the print job scheduling unit 25 checks whether the first reception buffer 33 and the second reception buffer 34 are full or empty, and transmits to the switching unit 31 a control signal indicating which reception buffer is empty and available for the received print job data. At this time, if both the first reception buffer 33 and the second reception buffer 34 are full, the print job scheduling unit 25 sends a waiting signal to the client computers 11, 12 that sent the print job data.

At operation 63, the print job scheduling unit 25 determines whether there is a current job being interpreted, based on the information available from the printer OS of the printing control unit 24. If there is a current job being interpreted, control proceeds to operation 67 (described below).

At operation 64, if it is determined at operation 63 that no current job is being interpreted, the printing control unit 24 initialises and runs the appropriate interpreter from the first memory unit 22. Once the interpreter has been initiated, the print job scheduling unit 25 waits a predetermined amount of time after the initiation of the interpreter, based on the printer OS of the printing control unit 24, to determine whether the interpretation of the received job data has been completed within a predetermined amount of time and to use the result of the determination as reference data for the next print job scheduling.

After a predetermined amount of time has passed after completion of operation 64, it is determined at operation 65 whether new print job data is currently arriving at the first reception buffer 33 or the second reception buffer 34. If there is new print job data currently arriving at the first reception buffer 33 or the second reception buffer 34, control proceeds to operation 67 (described below). If there is no new print job data currently arriving at the first reception buffer 33 or the second reception buffer 34, the print job data received at operation 62 is processed by the called interpreter at operation 66 and converted into printable data at operation 69.

If it is determined at operation 63 that there is a print job being interpreted or if it is determined at operation 65 that there are new print job data arriving at the first reception buffer 33 or the second reception buffer 34, a new schedule for initiating the first interpreter 36 and the second interpreter 37 for the multiple print jobs is established based on the first scheduling procedure determined at operation 61. This new scheduling for the initiation of the first interpreter 36 and the second interpreter 37 is described in detail below.

Referring to Figure 7, in operation 67 of Figure 6, it is determined at operation 71 whether the new print job data has higher priority than the previously received print job data by a priority comparison between the previously received print job data being interpreted and the new print job data. The network printing system has a job priority policy, which is established based on printing urgency and/or user priority, etc. The job priority policy enables higher priority print job data to be interpreted earlier than lower priority print job data being interpreted.

If the newly received print job data is determined at operation 71 not to be higher priority data, it is determined at operation 72 whether the interpreter run time for the previous print job data exceeds a predetermined amount of time, which is previously set by the print job scheduling unit 25.

If the newly received print job data is determined at operation 71 to be higher priority data or if it is determined at operation 72 that the interpreter run time for the previous print job data has exceeded the predetermined amount of time, an available interpreter for the newly received print job data is called at operation 73 from the first memory unit 22 to initiate the available interpreter.

If it is determined at operation 72 that the interpreter run time for the previous print job data has not exceeded the predetermined amount of time, the newly received print job data are made stand by data at operation 74.

Referring to Figure 6, after the initiation of the first interpreter 36 and the second interpreter 37 at operation 67 for multiple print jobs based on the first scheduling procedure, a schedule for interpreting the data of multiple print jobs that have been initiated is established based on the second scheduling procedure at operation 68. Operation 68 is described below in more detail with reference to Figure 8.

Referring to Figure 8, it is determined at operation 81 whether the data for multiple print jobs, being interpreted, has equal occupation ratios.

If it is determined at operation 81 that the data for multiple print jobs, being interpreted, does not have equal occupation ratios, it is determined at operation 82 whether there are higher priority job data.

If it is determined at operation 82 that there are higher priority job data being interpreted, the interpreter for the lower priority job data is interrupted at operation 83 to allow the higher priority job data to be completely interpreted earlier.

If the multiple print job data being interpreted are determined at operation 81 to have equal occupation ratios or if it is determined at operation 82 that no higher priority job data exist, the multiple print job data are interpreted alternately for a predetermined amount of time at operation 84 by time-sharing. Alternatively, the multiple print job data may be interpreted in the order of occupation ratios if the multiple print job data being interpreted have different occupation ratios. Time-sharing interpretation is achieved by storing a plurality of interpreters into the first memory unit 22 and by allocating a plurality of reception buffer areas and operating and heap areas for each of the plurality of interpreters in the second memory unit 23. In the embodiment of the present invention, the second or the third heap allocation method described above is used.

Although the above embodiment of the present invention is described with reference to a network printing system, the print job schedule control method according to the embodiment of the present invention may be applied to a non-network printing system that is not shared by multiple users, and, particularly, to a high-speed printing system, without significant modifications. In this case, a job priority policy for the non-network printing system is determined by print job priority, rather than by user priority. In particular, when a user sequentially requests the printing system to perform multiple print jobs, the user is allowed to transmit a data packet including job priority data to the printing system. The printing system checks the data packet including the job priority data and performs printing according to the job priority from the data packet.

The above-described invention may be embodied as computer-readable program code or may be embodied in a general purpose digital computer by running such a program from a computer-readable medium, including, but not limited to, storage media such as magnetic storage media (e.g., ROMs, floppy disks, hard disks, etc.), optically readable media (e.g., CD-ROMs, DVDs, etc.) and electrical or electromagnetic signals (e.g. transmissions over the Internet).

According to the present invention described above, a schedule for multiple print jobs, which are requested in sequential order, can be flexibly changed based on the first and second scheduling procedures established according to printing urgency and/or user priority and interpreter run time. As a result, a smaller document can be printed sooner than a larger document without waiting for the larger document to finish printing.

Although an embodiment of the present invention has been shown and described, it will be appreciated by those skilled in the art that changes may be made in this embodiment. For example, the type and the number of interpreters stored in the first memory unit 22 and the number of reception buffers for the second memory unit 23 may be varied.

## Claims

1. A method of processing a plurality of print jobs in a printer, the method comprising:
receiving first high level print data for a first print job;
subsequently receiving high level print data for a second print job;
interpreting the first high level print data to produce first low level print data;
interpreting the second high level print data to produce second low level print data; and
printing in accordance with the first and second low level print data,
**characterised by**
interrupting interpretation of said first high level print data to perform interpretation of said second high level print data.

2. A method according to claim 1, wherein each print job has priority associated therewith and the interpretation of the first high level data is interrupted if the priority of the second print job is greater than or equal to the priority of the first print job.

3. A method according to claim 2, wherein if, said priorities are equal, the interpretation of the first and second high level data is performed on a time-sharing basis.

4. A method according to claim 2 or 3, wherein the interpretation of the first high level print data is interrupted, if the priority of the second job is less than the priority of the first job and a predetermined period has elapsed since the start of the interpretation of the first high level print data.

5. A method according to claim 1, wherein the interpretation of the first and second high level data is performed on a time-sharing basis.

6. A printer comprising a print engine (26), interface means (21) for receiving high level print data for print jobs and processing means (22, 23, 24, 25) configured for interpreting high level print data, received by the interface means (21) to produce low level print data for controlling the print engine (26), **characterised in that** the control means (22, 23, 24, 25) is configured for interrupting interpretation of the first high level print data of a first print job to perform interpretation of the second high level print data of a second subsequently received print job.

7. A printer according to claim 6, wherein the control means (22, 23, 24, 25) is configured for determining a priority for each print job and to interrupt the interpretation of the first high level data if the determined priority of the second print job is greater than or equal to the determined priority of the first print job.

8. A printer according to claim 7, wherein the control means (22, 23, 24, 25) is configured such that if, said priorities are equal, the interpretation of the first and second high level data is performed on a time-sharing basis.

9. A printer according to claim 7 or 8, wherein the control means (22, 23, 24, 25) is configured such that the interpretation of the first high level print data is interrupted, if the priority of the second job is less than the priority of the first job and a predetermined period has elapsed since the start of the interpretation of the first high level print data.

10. A printer according to claim 6, wherein the control means (22, 23, 24, 25) is configured such that the interpretation of the first and second high level data is performed on a time-sharing basis.

11. A printing system comprising:
a first memory unit storing a printer operating system and at least two interpreters;
a second memory unit having an operating area for the printer operating system, an operating area and a heap area for each interpreter of the first memory unit, and at least two reception buffers temporarily storing incoming print job data;
a printing control unit controlling operation of the printing system based on the printer operating system, controlling the interpreters of the first memory unit to interpret the print job data, and transmitting the interpreted print job data to a printer engine; and
a print job scheduling unit providing a first scheduling procedure regarding initiation of the interpreters for multiple print jobs and a second scheduling procedure regarding interpretation of the multiple print jobs that have been initiated, the printer control unit using the first scheduling procedure and the second scheduling procedure to control the operation of the interpreters.

12. The printing system of claim 11, wherein the first memory unit assigns different link addresses to the respective interpreters.

13. The printing system of claim 11, wherein each of the interpreters is stored in the first memory unit in compressed form with a different link address and a RAM executable code, and is decompressed and copied into the second memory unit when executed.

14. The printing system of claim 11, wherein the heap area of the second memory unit has a number of sub-areas equal to the number of print jobs being interpreted.

15. The printing system of claim 11, wherein, when N print jobs are being interpreted, the heap area of the second memory unit has N heap areas for each respective print job and a common area for the N print jobs.

16. The printing system of claim 11, wherein the heap area of the second memory unit comprises segments, each segment having an equal size, the segments being sequentially assigned as each of the multiple print jobs begins to be interpreted.

17. The printing system of claim 11, wherein the first scheduling procedure allows interpretation of higher priority print job data to be initiated earlier than lower priority print job data, even when interpretation of preceding print job data has been initiated.

18. The printing system of claim 17, wherein the first scheduling procedure allows interpretation of new print job data to be initiated earlier than the preceding print job data, even when the new print job data do not have higher priority, when an interpreter run time of the preceding print job data has exceeded a predetermined amount of time.

19. The printing system of claim 18, wherein the print job scheduling unit determines print job priority on a user priority basis in a network environment.

20. The printing system of claim 18, wherein a user determines print job priority on a job priority basis in a non-network environment.

21. The printing system of claim 11, wherein the second scheduling procedure schedules alternate interpretation of the multiple print job data, which have started to be interpreted, by time-sharing, when the multiple print job data have equal occupation ratios without priorities.

22. The printing system of claim 11, wherein the second scheduling procedure schedules interpretation of the multiple print job data, which have started to be interpreted, according to occupation ratios when the multiple print job data have different occupation ratios without priorities.

23. The printing system of claim 21, wherein, when interpretation of higher priority print job data has been initiated, the second scheduling procedure stops interpretation of lower priority print job data to enable the higher priority print job data to be completely interpreted sooner than the lower priority print job data, regardless of the occupation ratios of the multiple print job data having interpretation already initiated.

24. The printing system of claim 22, wherein, when interpretation of higher priority print job data has been initiated, the second scheduling procedure stops interpretation of lower priority print job data to enable the higher priority print job data to be completely interpreted sooner than the lower priority print job data, regardless of the occupation ratios of the multiple print job data having interpretation already initiated.

25. The printing system of claim 11, wherein the first memory unit is a read only memory (ROM).

26. The printing system of claim 11, wherein the second memory unit is a random access memory (RAM).

27. The printing system of claim 11, further comprising a switching unit forwarding the incoming print job data to one of the at least two reception buffers in response to a control signal output from the print job scheduling unit, the control signal indicating whether the reception buffers are empty or full, respectively.

28. The printing system of claim 11, wherein the at least two interpreters are different types of interpreters.

29. The printing system of claim 11, wherein the at least two interpreters are the same type of interpreter.

30. The printing system of claim 11, wherein a number of the reception buffers used depends on a memory size of the second memory unit.

31. The printing system of claim 11, wherein a number of the interpreters used depends on a memory size of the first memory unit and the second memory unit.

32. A method of controlling a print job schedule, the method comprising:
scheduling initiation of interpreters according to a first scheduling procedure depending on print job priority between preceding print job data having interpretation initiated and succeeding print job data; and
scheduling a process of interpretation of multiple print job data having interpretation initiated according to a second scheduling procedure depending on occupation ratios and print job priority.

33. The method of claim 32, wherein the first scheduling procedure involves initiating interpretation of higher priority job data earlier than preceding print job data having interpretation already initiated.

34. The method of claim 33, wherein the first scheduling procedure involves allowing interpretation of new print job data to be initiated earlier than the preceding print job data, even when the new print job data do not have higher priority, when an interpreter run time of the preceding initiated print job data has exceeded a predetermined amount of time.

35. The method of claim 32, wherein the second scheduling procedure involves alternately interpreting the multiple print job data, which have started to be interpreted, by time-sharing, when the multiple print job data have equal occupation ratios without priorities.

36. The method of claim 33, wherein the second scheduling procedure comprises scheduling interpretation of the multiple print job data, which have started to be interpreted, according to the occupation ratios when the multiple print job data have different occupation ratios without priorities.

37. The method of claim 32, wherein, when interpretation of higher priority print job data has been initiated, the second scheduling procedure schedules termination of interpretation of lower priority print job data to enable the higher priority print job data to be completely interpreted sooner than the lower priority print job data, regardless of the occupation ratios of the multiple print job data having interpretation already initiated.

38. A method of controlling a print job schedule, the method comprising:
scheduling initiation of interpreters to initiate interpretation of succeeding print job data earlier, even when preceding print job data are being interpreted, when an interpreter run time for the preceding print job data exceeds a predetermined amount of time; and
scheduling interpretation of multiple print job data by time-sharing to alternate between the multiple print job data when the multiple print job data have equal occupation ratios without priorities, or scheduling interpretation of multiple print job data by time-sharing according to occupation ratios when the multiple print job data have different occupation ratios without priorities.

39. The method of claim 38, further comprising scheduling initiation of the interpreters to initiate interpretation of the succeeding print job data earlier, even when the preceding print job data are already being interpreted, when the succeeding print job data have priority.

40. The method of claim 38, further comprising scheduling interpretation of multiple print job data to terminate interpretation of lower priority print job data to enable higher priority print job data to be completely interpreted earlier when the multiple print job data being interpreted have higher priority, regardless of the occupation ratios of the multiple print job data being interpreted.

41. A computer-readable storage having embodied thereon a computer program for controlling a print job schedule in a printing system having a first memory unit storing a printer operating system and a least two interpreters, and a second memory unit having an operating area for the printer operating system, an operating area and a heap area for each interpreter of the first memory unit, and at least two reception buffers for temporarily storing incoming print job data, the computer program in the computer-readable storage comprising a process of:
initiating interpretation of succeeding print job data earlier, even when preceding print job data are being interpreted, when the succeeding print job data have higher priority;
initiating interpretation of the succeeding print job data earlier, when an interpreter run time of the preceding print job data exceeds a predetermined amount of time, even though the succeeding print job data does not have priority;
alternately interpreting multiple print job data by time-sharing when the multiple print job data have equal occupation ratios without priorities, or interpreting the multiple print job data by time-sharing according to occupation ratios when the multiple print job data have different occupation ratios without priorities; and
stopping the interpretation of lower priority print job data to allow higher priority print job data to be completely interpreted earlier; when the multiple print job data being interpreted have priorities, regardless of the occupation ratios of the multiple print job data.

42. The computer-readable storage of claim 41, further comprising determining whether each of the reception buffers is full or empty and forwarding the incoming print job data to one of the reception buffers that is empty and available for the incoming print job data.

43. The printing system of claim 11, wherein when any of the at least two interpreters receives the incoming print job data, the heap area of the interpreter receiving the incoming print job data is used to temporarily store the incoming print job data or to convert the incoming print job data into printable data.

44. A method of controlling a print job schedule for multiple print jobs that are requested in sequential order, the method comprising:
scheduling initiation of interpreters according to a first scheduling procedure depending on print job priority between preceding print job data having interpretation initiated and succeeding print job data;
scheduling a process of interpretation of multiple print job data having interpretation initiated according to a second scheduling procedure depending on interpreter run time and print job priority; and
changing the print job schedule according to the first scheduling procedure and the second scheduling procedure.
